Europäisches Patentamt

European Patent Office

Office européen des brevets

(19)

(11) Publication number: **0 357 093**
**A2**

# EUROPEAN PATENT APPLICATION

(21) Application number: **89200453.2**

(22) Date of filing: **22.02.89**

(51) Int. Cl.⁵: **B23Q 3/10**

(30) Priority: **01.09.88 CN 88106253**

(43) Date of publication of application:
**07.03.90 Bulletin 90/10**

(84) Designated Contracting States:
**DE GB IT**

(71) Applicant: **CHINA NATIONAL
AERO-TECHNOLOGY IMPORT AND EXPORT
CORP.**
**P.O. Box 647**
**Beijing(CN)**

Applicant: **QING-YANG MACHINE WORKS**
**P.O. Box 37**
**Qing-zhen Gui-Zhou Province(CN)**

(72) Inventor: **Changxiang, Xu**
**P.O. Box 37**
**Qing-zhen County Gui-Zhuo Province(CN)**
Inventor: **Ruixing, Zhuo**
**P.O. Box 37**
**Qing-zhen County Gui-Zhuo Province(CN)**
Inventor: **Qiulin, Yu**
**P.O. Box 37**
**Qing-zhen County Gui-Zhuo Province(CN)**

(74) Representative: **de Bruijn, Leendert C. et al
Nederlandsch Octrooibureau
Scheveningseweg 82 P.O. Box 29720
NL-2502 LS 's-Gravenhage(NL)**

(54) Eccentric dowel pin and pin-ajusted structured in hole type modular tooling systems.

(57) A set of eccentric dowel pins and a pin- adjusted structure can move interlocking features of a hole type modular tooling system directly and continuously along axes without rigging and indicating, and thus provide full flexibility to such a hole type modular tooling system.

FIG. 1

# ECCENTRIC DOWEL PIN AND PIN-ADJUSTED STRUCTURE IN HOLE TYPE MODULAR TOOLING SYSTEMS

This invention relates to jigs and fixtures , and particularly to a set of eccentric dowel pins and a pin-adjusted structure for along-axis-adjusting of interlocking features of a hole type modular tooling system.

An unrestricted workpiece has six degrees of freedom with respect to the axes of coordinate system : three along-axis-moving degrees and three around-axis-revolving degrees. For the workpiece to be machined, the relative degrees of freedom must be restricted by a jig or fixture. So , evidently , if any workpiece is to be fixtured in a modular tooling system , the interlocking features of the system must be able to freely move along and revolve around the axes for the features to be adjusted where they are necessary for constructing fixture bodies and fixing locators or clamps. In other words , a good modular tooling system should have two kinds of adjustability , along and around the coordinate axes. Since the advantage of slots is that they offer adjustability along axes , and holes do around axes , the available hole type modular tooling system must be advanced to offer the full adjustability by:

* introducing slots into the hole type system to solve its problem of adjustability along axes,

* bringing the advantage of adjustability around hole axes into full play.

The solution of adjustability along axes is covered in the scope of this patent application , and around axes is covered in patent application CN88100600.9.

Since the above-mentioned principles for modularizing of jigs and fixtures are advanced by the inventors after their thorough study of the available modular tooling technology , this invention resulting from the principles is a result of the available technology developing from the perceptual to the rational stage.

In the slot type modular tooling system , slots , as we know , are available, but they can neither make the slot type system completely have the continuous adjustability along them because of crossing , nor permit precise and fast setups because of rigging and indicating . In the available hole type system, almost no proper slots have been introduced , to say nothing of overcoming the slot disadvantages appearing in the slot type system.

The object of the invention is to provide a set of eccentric dowel pins and a pin- adjusted structrue , so as to continuously along axes adjust the interlocking features with the pin-adjusted structure without rigging and indicating , and thus, in conjunction with patent application CN88100600.9 , to make the hole type modular tooling system offer complete adjustability and permit precise and fast setups.

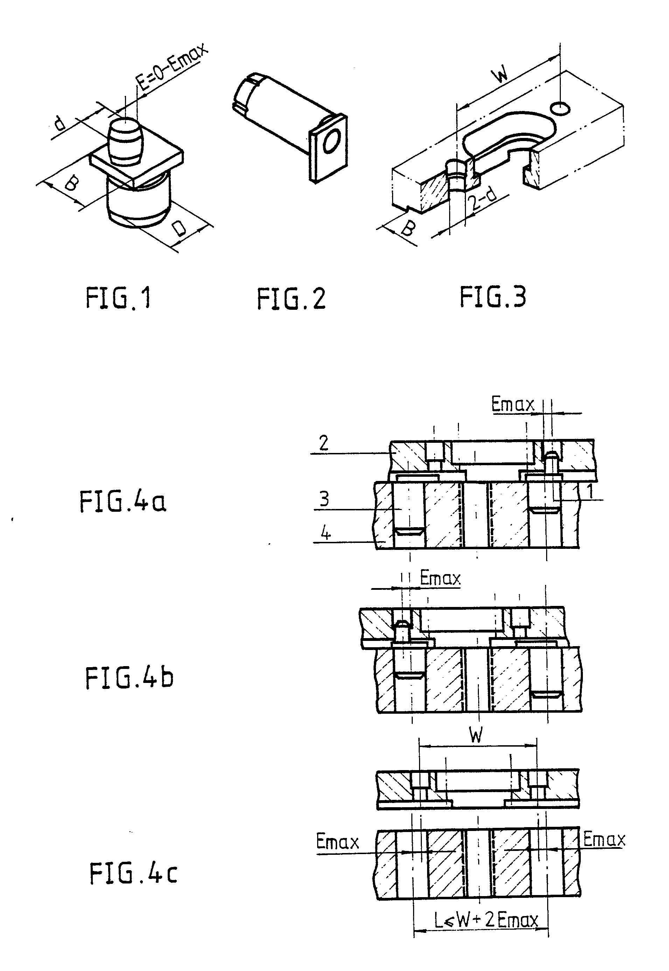

This invention comprises a set of eccentric dowel pins 1 , a pin-adjusted structure 2 and a key pin 3 (see Figs 1 to 4). The said eccentric dowel pin 1 is a complete module, which includes a D-diametral cylinder on the bottom of a B-wide prism and a d-diametral cylinder on top of the prism. The centre lines of the said two cylinders are eccentric on the symmetrical centre plane of the prism, and the eccentricity changes from 0 to Emax in a certain increment whereby a set of different eccentric dowel pins is sized out. The said pin adjusted structure 2 is not a complete module but a constituent of some modules, which, on the same symmetrical plane, includes two d-diametral and W - distant apertures, a B-wide keyway to the bottom and a pair of counter and through slots between the two apertures. The said key pin 3 is a pin with a B- wide prism used as tenon.

In use or assembly , the bottom cylinder of the eccentric dowel pin fits in with the D-diametral and L-distant hole in the datum 4, the top cylinder fits in with the d-diametral and W-distant apertures of the pin-adjusted structure 2, and the medium prism fits in with the B-wide keyway. To restrict the adjusting direction, the key pin 3 is used to fit in with the keyway and the adjacent hole in the datum 4. To have an adjustment of plus or minus eccentricity ($\pm$E), the mounted direction of the eccentric dowel pin 1 can be reversed. To continuously move the pin-adjusted structrue 2 for 0 to 4Emax , W must be more than or equal to L minus 2Emax (W$\geq$L-2Emax), and the mounted position of the eccentric dowel pin 1 and the key pin 3 in the datum hole and the adjusting aperture must be changed at the same time. Therefore, is an interlocking feature of a hole type modular tolling system is joined to the pin-adjusted structrue to constitute a complete module , the interlocking feature with the structure can be moved by the set of eccentric dowel pins continuously along the axes for 0 to 4 Emax without rigging and indicating , which has overcame the slot disadvantages appearing in the slot type system while solving the problem of no adjustability along axes in the hole type system.

In the drawings:

Fig. 1 is a perspective view of the eccentric dowel pin of the invention;

Fig. 2 is the the perspective view of the key pin;

Fig. 3 is the perspective view of the pin-adjusted structrue of the invention;

Fig. 4 is the sectional views illustrating that the eccentric dowel pin moves the pin-adjusted structure along axes in three typical positions; Wherein:

Fig. 4a shows the right limit position;

Fig. 4b shows the left limit position;

Fig. 4c shows the neutral position.

The grid hole pitch of the hole type modular tooling system in accordance with the invention is 50 mm ; The grid hole coordinate distance· is 25mm. In other words , the distance L between the two adjacent holes in the datum 4 is 50mm, and the minimum basic total distance to be adjusted continuously along axes should be 12.5mm. Thus , to satisfy the conditions of continuously full adjustment , the maximum eccentricity $E_{max}$ of the eccentric dowel pins is 3.15mm to ensure that $4E_{max}$ is more than or equal to a fourth of L ($4E_{max} \geq L/4$) and the d-diametral-aperture distance W of the pin-adjusted structure is 43.75 mm to ensure that W is more than or equal to L minus $2E_{max}$ ($W \geq L-2E_{max}$) . Since, in the preferred embodiments, the eccentric dowel pins are sized into a set of 64 pieces in increments of 0.05mm eccentricity and the serial eccentricity E in turn equals 0 , 0.05 , 0.10, ●●●, 3.05, 3.10 and 3.15 mm, the set of 64 eccentric dowel pins can , directly but without rigging and indicating , move the interlocking features with the pin-adjusted structure continuously along axes in 0.05 mm increments for 0 to 12.6mm.

## Claims

1. Eccentric dowel pin and pin-adjusted structure in hole type modular tooling systems, characterized in that:

1.1 , the said eccentric dowel pin is a complete module , which includes a D-diametral cylinder on the bottom of a B-wide prism and a d-dimetral cylinder on top of the prism ; the centre lines of the said two cylinders are eccentric on the symmetrical centre plane of the prism , and the eccentricity changes from 0 to $E_{max}$ in a certain increment whereby a set of different eccentric dowel pins is sized out;

1.2 , the said pin- adjusted structure is not a complete module but a constituent of some modules , which , on the same symmetrical plane , includes two d-diametral and W-distant apertures , a B-wide keyway in the bottom and a pair of counter and through slots between the two apertures ;

1.3 , in use or assembly , the bottom cylinder of the eccentric dowel pin fits in with the D-diametral and L-distant hole in the datum , the top cylinder fits in with the d- diametral and W-distant apertures of the pin-adjusted structure , and the medium prism fits in with the B-wide keyway ; to restrict the adjusting direction , a key pin is used to fit in with the keyway and the adjacent hole in the datum ; the said key pin is a pin with a B-wide prism used as tenon.

2. Eccentric dowel pins according to claim 1 , characterized in that:

the serial eccentricity E of eccentric dowel pins is in 0.05 mm increments and in turn equal to 0, 0.05, 0.10●●●, 3.05, 3.10 and 3.15 mm .

3. Eccentric dowel pins and pin-adjusted structure according to claim 1, characterized in that:

the conditions of continuously full adjustment are that $4E_{max}$ is more than or equal to a fourth of L ($4E_{max} \geq L/4$), and that W is more than or equal to L minus $2E_{max}$ ($W \geq L-2E_{max}$).

FIG.1    FIG.2    FIG.3

FIG.4a

FIG.4b

FIG.4c